# EUROPÄISCHE PATENTSCHRIFT

(11) **EP 0 694 442 B1**
(45) Veröffentlichungstag und Bekanntmachung des Hinweises auf die Patenterteilung: **11.11.1998**
(21) Anmeldenummer: 95108905.1
(22) Anmeldetag: 09.06.1995
(51) Int. Cl.: B60R 21/20

(54) **Airbag-Anordnung**
Air bag arrangement
Agencement de sac gonflable

(30) Priorität: 19.07.1994 DE 4425495; 28.09.1994 DE 4434685
(43) Veröffentlichungstag der Anmeldung: 31.01.1996
(60) Teilanmeldung: 97120390.6
(73) Patentinhaber: TAKATA (EUROPE) VEHICLE SAFETY TECHNOLOGY GmbH, D-89081 Ulm (DE)
(72) Erfinder: Herrmann, Gert B., D-42699 Solingen (DE); Heudorfer, Benedikt, D-89278 Nersingen/leibi (DE); Klingauf, Gerhard, D-89186 Illerrieden (DE); Lung, Thomas, D-89075 Ulm (DE); Ritter, Martin, D-89233 Neu-Ulm (DE); Nann, Alexander, D-89160 Dornstadt (DE); Schuster-Woldan, Andreas, D-82166 Gräfelfing (DE)
(74) Vertreter: Manitz, Finsterwald & Partner

(56) Entgegenhaltungen:
- EP-A- 0 655 368
- DE-A- 3 811 373
- DE-A- 4 414 743
- FR-A- 2 625 960
- GB-A- 2 268 452
- GB-A- 2 270 882
- GB-A- 2 273 471
- PATENT ABSTRACTS OF JAPAN vol. 016 no. 471 (M-1318) ,30.September 1992 & JP-A-04 169356 (NIPPON PLAST CO LTD) 17.Juni 1992,

## Beschreibung

Die Erfindung betrifft eine Airbag-Anordnung nach dem Oberbegriff des Patentanspruchs 1.

Im Falle von unfallbedingten Beschleunigungen des Fahrzeuges, in dem die Airbag-Anordnung eingebaut ist, zündet eine pyrotechnische Ladung im Gasgenerator und bringt aus vorzugsweise dort radial vorgesehenen Bohrungen austretende Heißgase zum Einströmen in den zusammengefalteten Gassack, welcher sich daraufhin unter Aufbrechen der Abdeckung aufbläht und den Fahrzeuginsassen vor einem zu harten Aufprall schützt.

Bei bekannten Airbag-Anordnungen (EP 0 376 564 A1, DE 42 05 726 A1) besteht das Problem, daß eine relativ große Anzahl von Einzelteilen erforderlich ist und die Montage einen so großen Aufwand erfordert, daß eine wirtschaftliche Herstellung insbesondere in Massenfertigung nicht möglich ist. Weiter muß der Gassack an der Öffnung mit einem Wulst versehen sein. Das ist auch bei einem Gassack nach der DE 90 14 749 U der Fall.

Bei einer bekannten Airbag-Anordnung der eingangs genannten Gattung (FR-A-2625960) wird der um die Öffnung herum befindliche Rand des Gassackes um den Abdeckungs-Randbereich herumgeschlagen, zwischen flächigen Bauteilen eingespannt und durch Bolzen, Nieten oder Klebstoff befestigt. In ähnlicher Weise wird nach der gattungsbildenden JP-A-4169356 der um den Abdeckungs-Randbereich herumgeschlagene Rand des Gassackes durch über den Umfang verteilt angeordnete Nieten festgespannt.

Das Ziel der vorliegenden Erfindung besteht darin, eine Airbag-Anordnung der eingangs genannten Gattung zu schaffen, welche aus möglichst wenig Einzelteilen besteht und in besonders wirtschaftlicher Weise herstellbar und montierbar ist.

Zur Lösung dieser Aufgabe sind die Merkmale des kennzeichnenden Teils des Patentanspruchs 1 vorgesehen.

Durch die Verwendung eines am Generatorträger ausgebildeten Rahmenteils in Verbindung mit einer Abdeckpfanne wird unter Vermeidung von separaten Nieten, Schrauben oder Klebstoff im Abdeckungs-Randbereich eine weitgehend gleichmäßige, großflächige und sichere Halterung des Randes des Gassackes erzielt, wobei die Herstellung und Montage in besonders wirtschaftlicher Weise möglich sind.

Vorteilhafte Weiterbildungen der Erfindung entnimmt man den Ansprüchen 2 bis 5. Durch die Ausführungsform nach Anspruch 6 wird der Kraftaufwand bei der Montage verringert und einem Einreißen des Gassackes insbesondere im Bereich der Umschlagsfalten entgegengewirkt.

Die Erfindung wird im folgenden beispielsweise anhand der Zeichnung beschrieben; in dieser zeigt:
- Figur 1: einen Querschnitt durch eine Airbag-Anordnung zur Veranschaulichung des grundsätzlichen Aufbaus, wobei links von der Mittelachse 29 eine etwas andere Ausführungsform eingezeichnet ist als rechts davon und die Gesamtanordnung rotationssymmetrisch zur Mittelachse 29 ist,
- Figur 2: eine Airbag-Anordnung gemäß der Erfindung im Schnitt links von der Mittelachse und in Seitenansicht rechts von der Mittelachse,
- Figur 3: eine vergrößerte Darstellung des Bereiches III in Figur 2,
- Figur 4: eine Draufsicht der Airbag-Anordnung von Figur 2 und
- Figur 5: einen schematischen Schnitt der Airbag-Anordnung von Figur 2 längs der Linie V-V, aus welcher die Lage eines für Aufnahme der beim Umschlagen gebildeten Gassackfalten vorgesehenen Raumes in den Eckbereichen ersichtlich ist, wobei die Teile des Gassacks innerhalb des Wandteiles zur Vereinfachung der Zeichnung weggelassen wurden.

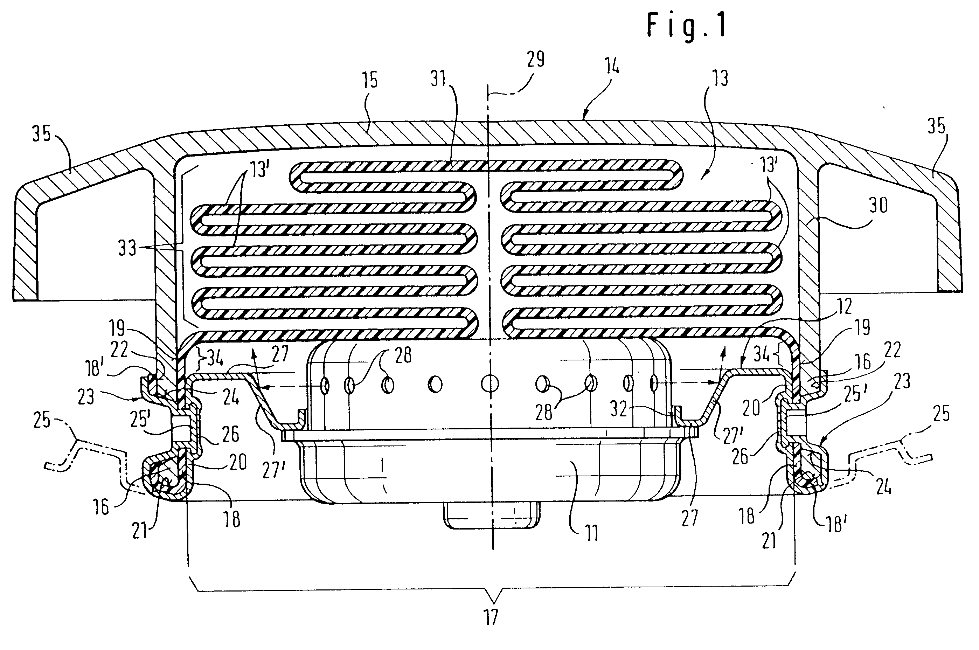

Gemäß Figur 1 ist in einer topfförmigen Abdeckung 14 mit einem flachen Boden 15 und einer im wesentlichen kreiszylindrischen Wand 30 mit der Mittelachse 29 als Zylinderachse ein zusammengefalteter Gassack 13 vorgesehen, dessen geschlossenes Ende 31 sich unmittelbar gegenüber dem Boden 15 befindet, während eine am gegenüberliegenden Ende vorgesehene Öffnung 17 einen Generatorträger 12 aufnimmt, der seinerseits radial innen eine Aufnahmeöffnung 32 für einen dort eingesetzten und befestigten Gasgenerator 11 aufweist. Der Gasgenerator 11 ist kreiszylindrisch und rotationssymmetrisch zur Mittelachse 29 angeordnet und weist oberhalb der Verbindungsstelle zum Generatorträger 12 über den Umfang verteilt Gasaustrittsöffnungen 28 auf, aus denen im Falle einier Auslösung radial heiße Gasstrahlen austreten.

Wesentlich ist, daß sich an den in senkrecht zur Mittelachse 29 verlaufende Falten 13' gelegten Bereich 33 des Gassackes 13 in Richtung vom Boden 15 weg ein kreiszylindrischer Öffnungs-Randbereich oder Kragen 18 mit der Mittelachse 29 als Zylinderachse anschließt, der an der Innenwand 19 des vom Boden 15 abgewandten Abdeckungs-Randbereichs 16 der Wand 30 anliegt.

Gemäß der Erfindung besteht der Generatorträger 12 aus einem den Gasgenerator 11 umschließenden Rahmenteil 27, der bei der dargestellten kreissymmetrischen Ausbildung zur Mittelachse 29 einen Rahmenring darstellt, und einem radial äußeren, in vom Boden 15 abgewandter Richtung abgebogenen Wandteil 20, welcher beim dargestellten Ausführungsbeispiel im wesentlichen die Form eines Kreiszylinders hat. Der Durchmesser des Wandteils 20 ist so gewählt, daß seine Außenwand an der Innenseite des Öffnungs-Randbereiches 18 anliegt. Diese entspricht einer bevorzugten Anordnung, in welcher die Erzeugenden des Öffnungs-Randbereiches 18 bzw. des Wandteils 20 parallel zueinander verlaufen. Eine weitere bevorzugte Anordnung ergibt sich, wenn die Erzeugenden in Richtung auf den Boden 15 der Abdeckung 14 etwas aufeinander zu laufen.

Der Öffnungs-Randbereich 18 des Gassackes 13 erstreckt sich bis zur vom Boden 15 abgewandten Stirnkante 21 des Abdeckungs-Randbereiches 16 und ist dort um die Stirnkante 21 nach außen herumgeschlagen. Bei dem Ausführungsbeispiel, das rechts von der Mittelachse 29 in Figur 1 dargestellt ist, befindet sich der herumgeschlagene Randbereich 18' praktisch nur im Bereich der Stirnkante 21, während bei dem links von der Mittelachse 29 wiedergegebenen Ausführungsbeispiel der herumgeschlagene Randbereich 18' sich über einen erheblichen Teil der Außenwand 22 des Abdeckungs-Randbereiches 16 wieder in Richtung zum Boden 15 erstreckt.

Der Wandteil 20 des Generatorträgers 12 weist über den Umfang verteilt an seinem vom Boden 15 abgewandten Ende eine Reihe von Biegeklammern 23 auf, die einstückig mit ihm ausgebildet sind. Die Biegeklammern 23 besitzen in einem Abstand von der Stirnkante 21 Befestigungsmittel in Form von nach dem Durchsetzfügeverfahren verformbaren flachen Bereichen 25.

In Figur 1 sind die Biegeklammern 23 und die Befestigungsbereiche 25 sowohl in der Ausgangsposition vor dem Herumbiegen als auch in der fertig montierten Position dargestellt, wo durch nietenartiges Herausformen der Bereiche 25 und Zusammenfließen mit dem bei 26 komplementär verformten Wandteil 20 ein Durchsetzfüge-Kraftspanner 25' erzeugt ist.

Im Bereich jeder Befestigungsklammer 23 befindet sich in dem Abdeckungs-Randbereich 16 eine radiale Befestigungsbohrung 24, deren Durchmesser an den Durchmesser des Kraftspanners 25' angepaßt ist.

Die Herstellung und Montage der beschriebenen Airbag-Anordnung geht wie folgt vor sich:

Der Gassack 13 wird aus einem zusammengefalteten Teil 33 und einem Öffnungs-Randbereich bzw. Kragen 18 hergestellt und kann gegebenenfalls vorgefertigt angeliefert werden.

Die weiteren Teile der Anordnung, nämlich der Generator 11, der Generatorträger 12 und die Abdeckung 14 können gesondert angefertigt werden, wobei zunächst die Abdeckung 14 und der mit dem Generatorträger 12 zusammengebaute Generator 11 gesonderte Bauelemente darstellen.

Anschließend wird dann zunächst der Gassack 13 in zusammengefalteter Form in den Innenraum der Abdeckung 14 in der aus Figur 1 ersichtlichen Weise eingebracht, wobei der Öffnungsrandbereich 18 um die Stirnkante 21 herumgeschlagen wird und dabei zur Anlage an der Innenwand 19 und beim Ausführungsbeispiel links von der Mittelachse 29 auch an der Außenwand 22 des Abdeckungs-Randbereichees 16 kommt.

Nunmehr wird von der vom Boden 15 und Gassack 13 abgewandten Seite her axial der bereits mit dem Gasgenerator 11 zusammengebaute oder mit ihm ein Stück bildende Generatorträger 12 eingeschoben, wobei der Wandteil 20 an der Innenwand des Öffnungs-Randbereiches des Gassackes 13 entlanggleitet, bis die aus Figur 1 ersichtliche Position erreicht ist.

Jetzt werden die Biegeklammern 23 mittels eines nicht dargestellten geeigneten Werkzeuges links von der Mittelachse 29 in Uhrzeigersinn um die Stirnkante 21 herumgebogen, wobei die Bereiche 25 ausgeformt und durch die Befestigungsbohrungen 24 hindurchgetrieben werden, den Öffnungs-Randbereich 18 durchbohren und mit dem Wandteil 20 durch Bildung der komplementären Vertiefungen 26 vernietet werden. Für diesen Vorgang kann ein sämtliche Biegungen und Fügevorgänge zugleich vornehmendes geeignetes Werkzeug vorgesehen sein.

Nach Verbindung der verformten Bereiche 25' mit dem Wandteil 20 durch Ausbildung hinterschnittener Vertiefungen 26 ist der Öffnungs-Randbereich 18 mit dem Wandteil 20 und dem Abdeckungs-Randbereich 16 druckdicht verspannt, so daß beim Zünden des Gasgenerators 11 und dem anschließenden Aufblähen des Gassackes 13 unter Aufbrechen des Bodens 15 der Abdeckung 14 ein sicherer Halt des Gassackes 13 im Bereich seiner Öffnung 17 gewährleistet ist.

Von besonderer Bedeutung ist die Stufe 27' im Rahmenring 27, welche beim Ausführungsbeispiel nach Figur 1 als sich zum Boden 15 hin konisch erweiternde Ringstufe ausgebildet ist und radial gegenüber den Gasaustrittsbohrungen 28 liegt. Auf diese Weise gelangen die aus den Gasaustrittsbohrungen 28 im Sinne der gestrichelten Pfeile in Figur 1 verlaufenden Heißgase zunächst auf die Ringstufe 27', wo sie im wesentlichen in Richtung auf den Boden 15 umgelenkt werden und dadurch den Gassack 13 aufblähen. Auf diese Weise werden die heißen Gase weitgehend von dem radial nach innen freiliegenden und im wesentlichen stationären Bereich 34 des Gassackes 13 ferngehalten.

Aufgrund der Ausbildung gemäß der Erfindung kann der Generatorträger 12 in weitgehend beliebiger Form ausgestaltet werden, sofern er nur die sich aus Figur 1 ergebende grundsätzliche Rahmenform aufweist. Es kann auch mehr als ein Generator 11 an einem Generatorträger 12 befestigt sein.

Rund um den Boden 15 der topfförmigen Abdeckung 14 kann noch ein im wesentlichen ringförmiger Abdeckbereich 35 vorgesehen sein, der die dahinterliegenden Bauelemente verdeckt.

In den folgenden Figuren bezeichnen gleiche Bezugszahlen entsprechende Bauelemente wie in Figur 1.

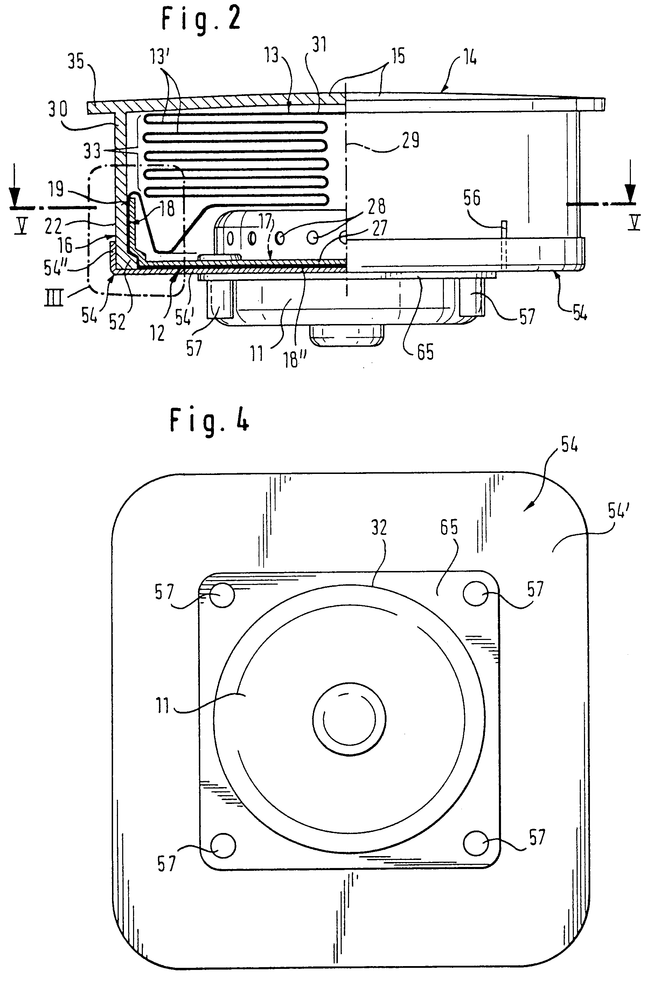

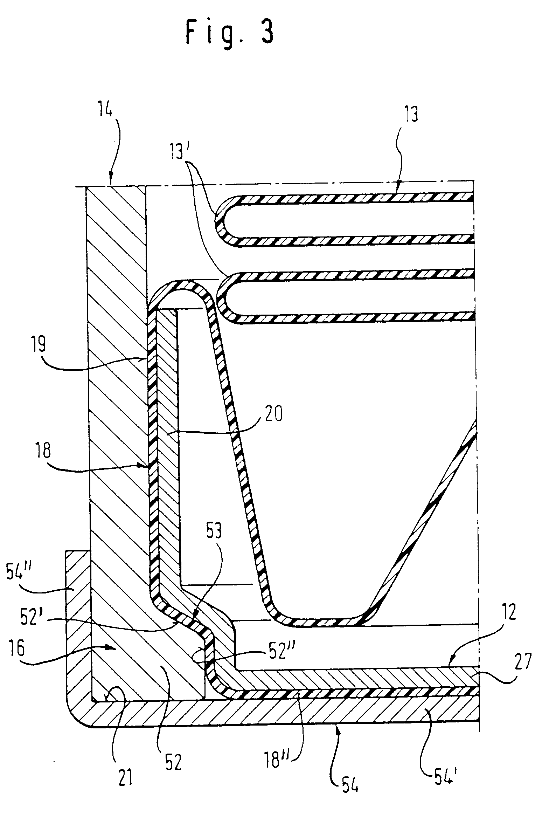

Eine besonders für Beifahrersitze geeignete, bevorzugte Airbag-Anordnung gemäß der vorliegenden Erfindung wird mit Bezug auf die Figuren 2 bis 5 erläutert.

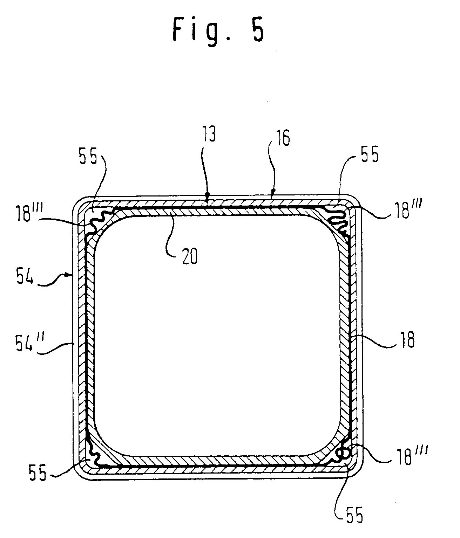

Gemäß dieser Ausführungsform ist in der topfförmigen Abdeckung 14 mit dem flachen Boden 15 und der ein Rechteck mit abgerundeten Ecken umfassenden Wand 30 mit der Mittelachse 29 der zusammengefaltete Gassack 13 vorgesehen, dessen geschlossenes Ende 31 sich unmittelbar gegenüber dem Boden 15 befindet, während seine am gegenüberliegenden Ende vorgesehene Öffnung 17 den nach Figur 4 in einer kreisförmigen Aufnahmeöffnung 32 einer quadratischen Platte 65 befestigten Gasgenerator 11 aufnimmt. Der Gasgenerator 11 ist rotationssymmetrisch um die Mittelachse 29 angeordnet und weist oberhalb der Verbindungsstelle zum Generatorträger 12 über den Umfang verteilt Gasaustrittsöffnungn 28 auf, aus denen im Falle einer Auslösung radial heiße Gasstrahlen austreten.

An den in senkrecht zur Mittelachse 29 verlaufende Falten 13' gelegten Bereich 33 des Gassackes 13 schließt sich in Richtung weg vom Boden 15 der Öffnungs-Randbereich 18 an. Der Öffnungs-Randbereich 18 liegt allgemein an der Innenwand 19 dees Abdeckungs-Randbereichs 16 der Wand 30 an, in welcher mehrere sich vorzugsweise diametral gegenüberliegende, von der Stirnkante des Abdeckungs-Randbereiches 16 sich axial in Richtung auf den Boden 15 hin erstreckende Axialschlitze 56 angeordnet sind. Die Ecken des Abdeckungs-Randbereiches 16 sind nach Figur 5 stärker gekrümmt als die des Wandteils 20, wodurch Eckräume 55 gebildet sind, in denen die beim Umlegen des Öffnungs-Randbereiches 18 außen am rundum den Generator 11 senkrecht zur Mittelachse 29 verlaufenden ebenen Teil 18'' in die axiale Richtung entstehenden Umschlagfalten 18''' des Gassackes untergebracht sind.

Der Generatorträger 12 besteht aus dem den Gasgenerator 11 umschließenden Rahmenteil 27, das bei der dargestellten Ausbildung rechteckig ist und sich innen mit der Platte 65 überlappt, und dem mit diesem einstückigen äußeren, in auf den Boden 15 zugewandter Richtung, insbesondere durch Tiefziehen abgebogenen Wandteil 20.

Auf der von dem Boden 15 der Abdeckung 14 abgewandten Seite des Rahmenteils 27 ist eine mit einem ebenen Boden 54' und einem rechtwinklig in Richtung des Bodens 15 der Abdeckung 14 abgeobenen Rand 54'' versehene Abdeckpfanne 54 vorgesehen. Der Boden 54' weist eine zentrale Öffnung zur Aufnahme des Generatorträgers 12 auf und ist unter Einspannung des dorthin längs der Wand 20 und zwischen dieser und der Wand 19 des Abdeckungs-Randbereiches 16 geführten Öffnungs-Randbereiches 18 auf das Rahmenteil 27 aufgelegt und mit diesem über Befestigungselemente 57 wie Schrauben, Bolzen oder dergl. verbunden. Dabei umgreift der Rand 54'' der Abdeckpfanne 54 den Abdeckungs-Randbereich 16 und liegt von außen an ihm an. Dadurch wird ein Ausbeulen des Abdeckungs-Randbereiches 16 im Bereich des Randes 54'' vermieden.

Erfindungsgemäß weist der Abdeckungs-Randbereich 16 am vom Boden 15 der Abdeckung 14 abgewandten Endbereich eine nach innen erweiterte Rippe 52 auf, die mit einer komplementären Ausnehmung 53 des Wandteils 20 derart in Eingriff steht, daß der Generatorträger 12 unter Einspannung des Öffnungs-Randbereiches 18 nach der Verbindung mit der Abdeckpfanne 54 axial in beiden Richtungen gehalten ist. Die von dem Boden 54' abgewadnte Berandung 52' der Rippe 52 bzw. der Ausnehmung 53 verläuft dabei zweckmäßig schräg zur Mittelachse 29. Die vom Boden abgewandte Berandung der Rippe 52 ist mit der des Abdeckungs-Randbereiches 16 bündig und liegt mit letzter an dem Boden 54' an. Die der Mittelachse 29 zugewandte Berandung 52'' der Rippe 52 bzw. der Ausnehmung 53 verläuft in axialer Richtung.

Die Einzelteile können auf verschiedene Weisen montiert werden. Bevorzugt wird zunächst der Generatorträger 12 derart in den Öffnungs-Randbereich 18 des Gassackes 13 eingebracht, daß der Öffnungs-Randbereich 18 längs des Wandteils 20 und dann entlang des ebenen Rahmenteils 27 verläuft. Dann wird die Abdeckung 14 axial auf das Wandteil 20 geschoben, wobei der Abdeckungs-Randbereich 16 durch das Wandteil 20 zwischen den Axialschlitzen 56 federnd aufgespreizt wird, bis die an dem Wandteil 20 und dem Gassack 13 entlang gleitenden Vorsprünge 52 in die Ausnehmungen 53 einschnappen können. Gleichzeitig gelangen die Umschlagfalten 18''' in die dafür vorgesehenen Eckräume 55.

Danach werden der Gasgenerator 11 mit der Platte 65 und die Abdeckpfanne 54 von der vom Boden 15 unter Einklemmung des ebenen Teils 18'' des Öffnungs-Randbereiches 18 zwischen dem Rahmenteil 27 und dem Boden 54' am Rahmenteil 27 durch Befestigungselemente 57 befestigt, wobei die Abdeckpfanne 54 den Abdeckungs-Randbereich 16 mit ihrem Rand 54' umgreift und durch die das Rahmenteil 27, den Boden 54', und die daraufliegende Platte 65 axial zusammenspannenden Befestigungselemente 57 sichergestellt ist, daß der Generator 11 sowie der Generatorträger 12 und die Abdeckpfanne 54 sicher in beidne Richtungen axial gehalten wird.

Auf diese Weise wird der Abdeckungs-Randbereich 16 von dem Rand 54'' verstärkend umfaßt, so daß beim Zünden des Gasgenerators 11 und dem anschließenden Aufblähen des Gassackes 13 unter Aufbrechen des Bodens 15 der Abdeckung 14 der Abdeckungs-Randbereich 16 sich in dem vom Rand 54'' umfaßten Bereich nicht ausbeulen kann und der Öffnungs-Randbereich 18 dort und zwischen dem plattenförmigen Rahmenteil 54'' sicher festgeklemmt bleibt.

Die quadratische bzw. kreisrunde Öffnung 17 des Gassackes 13 umgibt nach Figur 2 die bevorzugt Kreiszylindrische Außenwand des Generators 11 bzw. liegt dieser mit geringem radialen Abstand gegenüber. Der die Öffnung 17 unmittelbar umgebende und nach außen bis zum Ende des ebenen plattenförmigen Rahmenteils 27 reichende ebene Teil 18'' des Randbereiches 18 ist nach dem Einspannen zwischen dem Rahmenteil 27 und dem Boden 54' eben, so daß dort eine mechanisch feste und gasdichte Verbindung geschaffen wird. Die sich beim Umlegen des Öffnungs-Randbereiches 18 in die axiale Richtung entlang des Wandteils 20 ergebenden Falten 18'' werden wie oben bereits anhand von Figur 5 beschrieben in den hierfür vorgesehenen Eckräumen 55 untergebracht.

## Patentansprüche

1. Airbag-Anordnung bei Kraftfahrzeugen mit
- wenigstens einem Gasgenerator (11),
- einem Generatorträger (12),
- einem zusammengefalteten Gassack (13) mit wenigstens einer den Gasgenerator (11) aufnehmenden Öffnung (17) und
- einer den zusammengefalteten Gassack (13) aufnehmenden, topfartigen Abdeckung (14), deren Boden (15) von mittels des Gasgenerators (11) expandierten Gassack (13) aufbrechbar ist und deren von Boden (15) abgewandter Abdeckungs-Randbereich (16) mit dem Generatorträger (12) verbunden ist, wobei
- der wulst- und einlagenfreie Öffnungs-Randbereich (18) um die Öffnung (17) des Gassackes (13) mit dem Gasgeneratorträger (12) fest und druckdicht verbunden ist und
- der Öffnungs-Randbereich (18) des Gassackes (13) rundum zwischen zwei flächigen Bauteilen eingespannt ist,
dadurch **gekennzeichnet,**
daß ein am Generatorträger (12) ausgebildetes Rahmenteil (27) als mit dem vom Boden (15) der Abdeckung (14) abgewandten Ende eines zumindest im wesentlichen parallel zur Innenwand (19), des Abdeckungs-Randbereiches (16) verlaufenden Wandteils (20) des Generatorträgers (12) verbundene, zumindest im wesentlichen ebene, eine Öffnung zur Aufnahme des Generators (11) aufweisende Platte ausgebildet ist, zwischen der und einer auf ihrer vom Boden (15) der Abdeckung (14) abgewandten Seite angeordneten und mit ihr über Befestigungselemente (57) verbundene, vorzugsweise ebenen, eine Öffnung zur Aufnahme des Generators (11) aufweisende Abdeckpfanne (54') der bis dorthin geführte Öffnungs-Randbereich (18) des Gassackes (13) festgeklemmt ist, und daß die Abdeckpfanne (54') sich in Richtung von der Mittelachse (29) weg bis über den Abdeckungs-Randbereich (16) erstreckt.

2. Anordnung nach Anspruch 1,
dadurch **gekennzeichnet,**
daß die Abdeckpfanne (54) sich bis zum Außenumfang des Abdeckungs-Randbereiches (16) erstreckt und sich dort in einem von außen in Richtung der Mittelachse (29) an dem Abdeckungs-Randbereich (16) anliegenden Rand (54'') fortsetzt.

3. Anordnung nach Anspruch 1 oder 2,
dadurch **gekennzeichnet,**
daß der Abdeckungs-Randbereich (16) wenigstens eine in Richtung zur Mittelachse (29) nach innen vorstehende Rippe (52) aufweist, an der in Richtung der Mittelachse (29) eine komplementäre Ausnehmung (53) des Wandteils (20) gegenüberliegt, derart, daß der Generatorträger (12) nach Verbindung mit der Abdeckpfanne (54) axial in beiden Richtungen gehalten ist.

4. Anordnung nach Anspruch 2 oder 3,
dadurch **gekennzeichnet,**
daß der Rand (54'') sich in Richtung des Bodens (15) der Abdeckung (14) bis über die Rippe (52) hinaus erstreckt.

5. Anordnung nach einem der Ansprüche 1 bis 4,
dadurch **gekennzeichnet,**
daß Axialschlitze (56) in der Wand der Abdeckung (14) vorgesehen sind, derart, daß der Generatorträger (12) durch federndes Aufspreizen des Abdeckungs-Randbereiches (16) zwischen den Axialschlitzen (56) axial von außen aufschiebbar ist.

6. Anordnung nach einem der vorhergehenden Ansprüche,
dadurch **gekennzeichnet,**
daß bei rechteckigem Querschnitt von Abdeckungs-Randbereich (16) und Wandteil (20) die Eckbereiche derart unterschiedlich gekrümmt sind, daß ein Raum (55) für die Aufnahme der sich beim Anlegen des Gassackes (13) an das Wandteil (20) bildenden Umschlagsfalten vorgesehen ist.

## Claims

1. Airbag arrangement for motor vehicles comprising
- at least one gas generator (11),
- a generator carrier (12),
- folded up gas bag (13) having at least one opening (17) which receives the gas generator (11), and
- a pot-like cover (14) which receives the folded up gas bag (13) and the base (15) of which can be broken open by the gas bag (13) expanded by means of the gas generator (11) and of which the marginal region (16) of the cover remote from the base (15) is connected to the generator carrier (12) with
- the marginal region (18) around the opening (17) of the gas bag (13), which is free of beads and inserts, being firmly connected to the gas generator (12) in pressure-tight manner, and
- the marginal region (18) at the opening of the gas bag (13) being clamped all around the opening between two areal components,
characterised in that a frame part (27) formed at the generator carrier (12) is formed as a substantially flat plate having an opening for the reception of the gas generator (11) which is connected to the end of a wall part (20) of the generator carrier (12) which is remote from the base (15) of the cover (14), the wall part (20) extending at least substantially parallel to the inner wall (19) of the marginal region (16) of the cover, with the marginal region (18) of the gas bag (13) being clamped between the plate and a preferably flat cover pan (54') up to which the marginal region (18) of the gas bags is led and which is arranged at the side of the plate remote from the base (15) of the cover (14), and connected to it via fastener elements (57) and which has an opening for the reception of the generator (11); and in that the cover pan (54') extends in the direction away from the central axis (29) up to and beyond the marginal region (16) of the cover.

2. Arrangement in accordance with claim 1, characterised in that the cover pan (54) extends up to the outer periphery of the marginal region (16) of the cover and continues there in a flange (54'') which contacts the marginal region (16) of the cover from the outside in the direction towards the central axis (29).

3. Arrangement in accordance with claim 1 or claim 2, characterised in that the marginal region (16) of the cover has at least one rib (52) projecting inwardly in the direction towards the central axis (29), with a complementary recess (53) of the wall part (20) lying opposite to the rib (52) in the direction towards the central axis (29) in such a way that the generator carrier (12) is held axially in both directions after connection to the cover pan (54).

4. Arrangement in accordance with claim 2 or 3, characterised in that the flange (54'') extends in the direction towards the base (15) of the cover (14) up to and beyond the rib (52).

5. Arrangement in accordance with one of the claims 1 to 4, characterised in that axial slots (56) are provided in the wall of the cover (14) in such a way that the generator carrier (12) can be slid on axially from the outside between the axial slots (56) by resilient spreading of the marginal region (16) of the cover.

6. Arrangement in accordance with one of the preceding claims, characterised in that with a rectangular cross-section of the marginal region (16) of the cover and of the wall part (20) the corner regions are of different curvature in such a way that a space (54) is provided for receiving the turn-over folds formed by contact of the gas bag (13) against the wall part (20).

## Revendications

1. Agencement à coussin d'air dit "airbag" pour véhicules automobiles, comprenant :
- au moins un générateur de gaz (11),
- un porte-générateur (12),
- un sac à gaz (13) replié, présentant au moins une ouverture (17) qui reçoit le générateur de gaz (11), et
- un couvercle (14) en forme de pot, qui reçoit le sac à gaz (13) replié, dont le fond (15) est susceptible d'être rompu au moyen du sac à gaz (13) dilaté à l'aide du générateur à gaz (11), et dont la région de bordure (16) détournée du fond (15) est reliée au porte-générateur (12), dans lequel :
- la région de bordure (18) dépourvue de bourrelet et dépourvue d'insert est reliée de manière ferme et étanche à la pression au porte-générateur (12) autour de l'ouverture (17) du sac à gaz (13), et la région de bordure (18) de l'ouverture du sac à gaz (13) est tendue sur tout le pourtour entre deux composants plats,
caractérisé en ce que
une partie de cadre (27) réalisée sur le porte-générateur (12) est réalisée sous la forme d'une plaque, au moins sensiblement plane et présentant une ouverture pour recevoir le générateur (11), reliée à l'extrémité, détournée du fond (15) du couvercle (14), d'une partie de paroi (20) du porte-générateur (12) qui s'étend au moins sensiblement parallèlement à la paroi intérieure (19) de la région de bordure (16) du couvercle, tel que la région de bordure (18) de l'ouverture du sac à gaz (13) mené jusqu'à cet emplacement est fermement serrée entre ladite plaque et un volet de couverture (54') agencé sur son côté détourné du fond (15) du couvercle (14) et relié audit couvercle par l'intermédiaire d'éléments de fixation (57), ledit volet de couverture étant de préférence plan et comportant une ouverture pour recevoir le générateur (11), et en ce que le volet de couverture (54') s'étend en éloignement de l'axe médian (29) jusqu'au-dessus de la région de bordure (16) du couvercle.

2. Agencement selon la revendication 1,
caractérisé en ce que
le volet de couverture (54) s'étend jusqu'à la périphérie extérieure de la région de bordure (16) du couvercle, et se poursuit à cet endroit en une bordure (54'') appliquée depuis l'extérieur en direction de l'axe médian (29) contre la région de bordure (16) du couvercle.

3. Agencement selon l'une ou l'autre des revendications 1 et 2,
caractérisé en ce que
la région de bordure (16) du couvercle comporte au moins une nervure (52) dépassant vers l'intérieur en direction de l'axe médian (29), a laquelle est opposé en direction de l'axe médian (29) un évidement complémentaire (53) de la partie de paroi (20), de telle façon que le porte-générateur (12), après liaison avec le volet de couverture (54), est maintenu axialement dans les deux directions.

4. Agencement selon l'une ou l'autre des revendications 2 et 3,
caractérisé en ce que
la bordure (54'') s'étend en direction du fond (15) du couvercle (14) jusqu'au-delà de la nervure (52).

5. Agencement selon l'une des revendications 1 à 4,
caractérisé en ce que
des fentes axiales (56) sont prévues dans la paroi du couvercle (14), de telle façon que le porte-générateur (12) est susceptible d'être enfilé axialement depuis l'extérieur entre les fentes axiales (56) par écartement élastique de la région de bordure (16) du couvercle.

6. Agencement selon l'une des revendications précédentes,
caractérisé en ce que
lorsque la région de bordure (16) du couvercle et la partie de paroi (20) présentent une section rectangulaire, les régions de coin sont incurvées de manière différente, de telle sorte qu'il existe un espace (55) pour la réception des plis d'enveloppe qui se forment lorsque le sac à gaz (13) s'applique contre la partie de paroi (20).
